## Europäisches Patentamt

## European Patent Office

## Office européen des brevets

(19)

(11) Numéro de publication: **0 112 235 B1**

(12) **FASCICULE DE BREVET EUROPEEN**

(45) Date de publication du fascicule du brevet:
**06.08.86**

(51) Int. Cl.⁴: **G 21 C 13/08, E 04 H 7/06, E 04 H 7/30**

(21) Numéro de dépôt: **83402337.6**

(22) Date de dépôt: **05.12.83**

(54) **Paroi métallique de grandes dimensions à symétrie de révolution.**

(30) Priorité: **08.12.82 FR 8220545**

(43) Date de publication de la demande:
**27.06.84 Bulletin 84/26**

(45) Mention de la délivrance du brevet:
**06.08.86 Bulletin 86/32**

(84) Etats contractants désignés:
**BE DE GB IT LU NL**

(56) Documents cités:
**CA - A - 1 076 769**
**DE - A - 2 011 449**
**DE - A - 3 141 783**
**FR - A - 1 207 427**
**GB - A - 1 206 994**
**GB - A - 2 088 343**
**US - A - 3 171 517**
**US - A - 3 793 145**
**US - A - 4 217 739**
**US - A - 4 294 661**
**US - A - 4 357 297**

(73) Titulaire: **NOVATOME, La Boursidière R.N. 186, F-92357 Le Plessis Robinson (FR)**

(72) Inventeur: **Dezes, Philippe, 22 rue des Longs Prés, F-92100 Boulogne (FR)**

(74) Mandataire: **Bressand, Georges et al, c/o CABINET LAVOIX 2 Place d'Estienne d'Orves, F-75441 Paris Cedex 09 (FR)**

## Description

L'invention concerne une paroi métallique de grandes dimensions à symétrie de révolution. En particulier, l'invention concerne une paroi métallique d'un élément de structure de réacteur nucléaire à neutrons rapides.

Dans les réacteurs nucléaires à neutrons rapides et particulièrement dans les réacteurs de type intégré, la cuve principale contenant le coeur du réacteur et le métal liquide de refroidissement, et les structures internes à cette cuve, sont constituées, pour nombre d'entre elles, par des parois métalliques à symétrie de révolution de très grandes dimensions.

La cuve principale renferme par exemple une virole interne de très grandes dimensions qui constitue une partie de la cuve interne séparant l'espace intérieur de la cuve principale en une zone renfermant le sodium liquide chaud sortant des assemblages du coeur et une zone renfermant le sodium liquide refroidi. Il existe également des paroiss de très grandes dimensions appelées baffles de protection thermique ayant pour but de limiter les contraintes thermiques sur les structures, notamment lors des arrêts et des changements de régime du réacteur.

De telles parois ont des diamètres de l'ordre de vingt mètres et des hauteurs de quatre à dix mètres dans les réacteurs construits actuellement, et une épaisseur relativement faible, de l'ordre de vingt millimètres. Il importe en effet de limiter la masse de ces parois en acier inoxydable et donc le coût de construction, et il importe également de limiter l'épaisseur pour des raisons mécaniques, les contraintes d'origine thermique restant ainsi relativement faibles.

La rigidité et la résistance de ces parois doivent cependant être suffisantes vis-à-vis des sollicitations susceptibles d'engendrer des dommages par flambage telles que les pressions externes. Pour rigidifier de telles parois, il a été proposé de souder des disques de tôle sur la surface interne ou externe, perpendiculairement à la surface. Cette solution présente des inconvénients car les opérations de soudure sont plus nombreuses ce qui augmente de façon importante le coût de construction.

De plus de tels disques saillants par rapport à la paroi peuvent créer des contraintes et des transferts de chaleur non désirables.

On connaît également des structures métalliques de grandes dimensions telles que des silos à grains dont la surface latérale est constituée par une tôle métallique présentant des ondulations assurant une certaine rigidification de la structure. Le mode de construction de telles structures relativement légères n'est évidemment pas transposable à des parois de réacteur nucléaire.

On connaît également des cuves de réacteurs nucléaires réalisées par assemblages de tôles de forte épaisseur soudées entre elles. Ce type de construction ne peut être employé pour des cuves de très grandes dimensions à paroi d'épaisseur faible, qu'en utilisant des éléments de raidissement saillants dont on a indiqué plus haut les inconvénients.

Le but de l'invention est donc de proposer une paroi métallique de grandes dimensions à symétrie de révolution ayant un diamètre supérieur à quatre mètres, une hauteur supérieure à quatre mètres, une épaisseur comprise entre dix et trente millimètres, constituée par des portions de paroi soudées bout à bout de façon à être coaxiales, la méridienne de la paroi comprenant au moins deux tronçons successifs, paroi ne comportant pas de raidisseur saillant par rapport à sa surface, et dont la masse soit la plus faible possible.

Dans ce but, les portions de paroi sont tronconiques ou cylindriques et l'extrémité commune des deux tronçons est située entre la droite joignant leurs autres extrémités et l'axe de révolution, formant ainsi une «onde concave», la distance entre l'extrémité commune et la droite joignant les autres extrémités de ces deux tronçons, appelée profondeur d'onde, étant comprise entre cinq et vingt fois l'épaisseur de la paroi, la distance entre les autres extrémités de ces tronçons, appelée hauteur d'onde, étant comprise entre dix et quarante fois la profondeur d'onde, ces distances étant mesurées sur la fibre moyenne de la coupe méridienne de la paroi.

Afin de bien faire comprendre l'invention, on présente à titre d'exemples non limitatifs trois parties de baffle de protection thermique d'un réacteur nucléaire à neutrons rapides réalisées selon l'invention. Ces parties de baffle sont réalisées à partir de tôles en acier inoxydables par mise en forme, assemblage et soudage de panneaux tronconiques ou cylindriques.

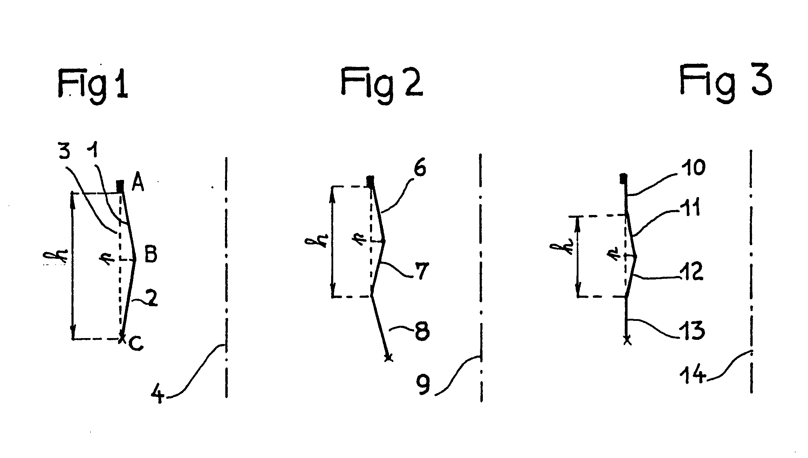

La figure 1 est une vue en coupe par un plan vertical passant par l'axe de révolution d'une partie de baffle qui était constituée par une virole cylindrique dans les dispositions de l'art antérieur. La partie de baffle selon l'invention est constituée par deux portions tronconiques soudées bout à bout le long de leurs petites bases. On a représenté la méridienne de la paroi constituée par des tronçons 1, 2 leur extrémité commune B, la droite 3 joignant leurs autres extrémités A, C et l'axe de révolution 4. L'extrémité commune B est située entre la droite 3 et l'axe 4, les tronçons 1, 2 formant ainsi une «onde concave». La distance p entre le point B et la droite 4, appelée profondeur d'onde est égale à 200 mm. L'épaisseur de paroi e a pour valeur 20 mm, le rapport p/e est donc égal à 10. La distance h entre A et C, appelée hauteur d'onde, est égale à 4 mètres. Le rapport h/p est donc égal à 20.

La figure 2 est une vue en coupe d'une partie de baffle constituée par trois portions tronconiques. On a représenté la méridienne de la paroi constituée par les trois tronçons 6, 7, 8 et l'axe de révolution 9. Les tronçons successifs 6 et 7 déterminent une onde concave caractéristique de l'invention. La profondeur d'onde p est égale à 150 mm, l'épaisseur de la tôle e est égale à 25 mm. Le rapport p/e vaut 6. La hauteur d'onde h est égale à 4,5 mètres. Le rapport h/p vaut 30.

La figure 3 est une vue en coupe d'une partie de baffle qui était constituée par une virole cylindrique dans les dispositions de l'art antérieur. La partie de baffle selon l'invention est constituée par une portion supérieure cylindrique, deux portions tronconiques assemblées par leurs petites bases, et une portion inférieure cylindrique. On a représenté la méridienne de la paroi constituée par les tronçons 10, 11, 12 et 13 et l'axe de révolution 14. Les tronçons intermédiaires 11 et 12 déterminent une onde concave caractéristique de l'invention. La profondeur d'onde p est égale à 180 mm, l'épaisseur de tôle e est égale à 25 mm. Le rapport p/e vaut donc 7,2. La hauteur d'onde h est égale à 3 mètres. Le rapport h/p vaut donc 16,6.

De telles parois peuvent supporter des sollicitations d'amplitude importantes, bien supérieures à celles que peuvent supporter les parois de même épaisseur comportant des zones rectilignes à la place des zones concaves.

Les principaux avantages d'une paroi selon l'invention sont de conduire à masse égale de matière à une bien meilleure résistance de la paroi vis-à-vis de sollicitations susceptibles d'engendrer des dommages par flambage, telles que des pressions externes. La fabrication de la paroi demande des opérations de formage et de soudure très voisines de celles correspondant à la construction de la paroi sans onde. On ne crée pas de ponts singuliers tels que ceux crées par des raidisseurs soudés sur la paroi, et l'on n'introduit pas de contraintes supplémentaires. Ceci est particulièrement intéressant dans le cas des parois d'un réacteur nucléaire à neutrons rapides renfermant du sodium liquide à température élevée.

L'invention ne se limite pas aux modes de réalisation qui ont été présentés, mais elle en comporte au contraire toutes les variantes dans le cadre de la protection déterminée par les revendications.

Enfin l'invention s'applique non seulement aux parois des grandes dimensions utilisées dans un réacteur nucléaire à neutrons rapides mais également à toute paroi de grandes dimensions pouvant subir des sollicitations méchaniques importantes telles que des pressions externes, ou à la fois des sollicitations mécaniques et thermiques importantes.

## Revendications

1. Paroi métallique de grandes dimensions à symétrie de révolution ayant un diamètre supérieur à quatre mètres, une hauteur supérieure à quatre mètres, une épaisseur comprise entre 10 et 30 mm, constituée par des portions de paroi soudées bout à bout de façon à être coaxiales, la méridienne de la paroi comprenant au moins deux tronçons successifs (1, 2), caractérisée en ce que les portions de paroi sont tronconiques ou cylindriques et en ce que l'extrémité commune B des deux tronçons (1, 2) est située entre la droite joignant leurs autres extrémités (A, C) et l'axe de révolution (4) formant ainsi une «onde concave», la distance entre l'extrémité commune B et la droite joignant les autres extrémités (A, C) de ces deux tronçons (1, 2), appelée profondeur d'one, étant comprise entre cinq et vingt fois l'épaisseur de la paroi, la distance entre les autres extrémités (A, C) des deux tronçons, appelée hauteur d'onde, étant comprise entre dix et quarante fois la profondeur d'onde, ces distances étant mesurées sur la fibre moyenne de la coupe méridienne de la paroi.

2. Paroi métallique suivant la revendication 1, caractérisée par le fait qu'elle constitue au moins une partie d'une structure d'un composant de réacteur nucléaire à neutrons rapides.

## Patentansprüche

1. Rotationssymmetrische metallische Wandung mit einem Durchmesser grösser als 4 Metern, einer Höhe grösser als 4 Metern und einer Wandstärke zwischen 10 und 30 mm, bestehend aus koaxial aneinander geschweissten Wandteilen, wobei die Meridianlinie der Wandung mindestens zwei aufeinanderfolgende Abschnitte (1, 2) aufweist, dadurch gekennzeichnet, dass die Wandungsteile kegelstumpfartig oder zylindrisch sind und dadurch, dass das gemeinsame Ende B zweier Kegelstümpfe (1, 2) zwischen der ihre anderen Enden (A, C) verbindenden Geraden und der Drehachse (4) liegt, wodurch eine «konkave Welle» gebildet wird und wobei der Abstand zwischen dem gemeinsamen Ende B und der die anderen Enden (A, C) dieser beiden Kegelstümpfe (1, 2) verbindenden Geraden, Wellentiefe genannt, einen Wert annimmt, der zwischen dem fünf- und dem zwanzigfachen der Dicke der Wandung liegt und wobei der Abstand zwischen den beiden anderen Enden (A, C) der beiden Kegelstümpfe, Höhe der Welle genannt, einen Wert einnimmt, der zwischen dem zehn- und dem vierzigfachen der Tiefe der Welle liegt, und wobei diese Abstände auf der Mittellinie des Meridianschnittes der Wandung gemessen sind.

2. Metallische Wandung nach Anspruch 1, dadurch gekennzeichnet, dass sie mindestens einen Teil einer Struktur eines Teils eines schnellen Neutronenkernreaktors bildet.

## Claims

1. A large metal wall with symmetry of revolution, having a diameter greater than four meters, a height greater than four meters, a thickness of between 10 and 30 mm, which consists of wall sections welded end to end so as to be coaxial, the meridian of the wall comprising at least two successive sections (1, 2), characterized by the fact that the wall sections are frustoconical or cylindrical and that the common end (B) of the two sections (1, 2) is situated between the straight line joining their other ends (A, C) and the axis of revolution (4), thus forming a «concave wave», the distance between the common end B and the straight line joining the other ends (A, C) of these two sections (1, 2), called wave depth, being between five and twenty times the thickness of the wall, the distance between the other ends (A, C) of the two sections, called wave height, being between ten and fourty times the wave depth, these distances being measured on the median line of the meridian cross-section of the wall.

2. The metal wall as claimed in claim 1, characterized by the fact that it forms at least a part of a structure of a component of a fast neutron nuclear reactor.

Fig 3

Fig 2

Fig 1